# EUROPEAN PATENT SPECIFICATION

(11) **EP 3 309 994 B1**
(45) Date of publication and mention of the grant of the patent: **02.01.2019**
(21) Application number: 16807081.1
(22) Date of filing: 26.05.2016
(51) Int. Cl.: G06F 21/12, H04L 9/08

(54) **SOFTWARE DUPLICATION PREVENTION SYSTEM**
SYSTEM ZUR VERHINDERUNG DER SOFTWARE-DUPLIKATION
SYSTÈME DE PRÉVENTION DE REPRODUCTION DE LOGICIEL

(30) Priority: 09.06.2015 JP 2015116689
(43) Date of publication of application: 18.04.2018
(73) Proprietor: DENSO CORPORATION, Kariya-city, Aichi 448-8661 (JP)
(72) Inventor: MATSUNAGA, Takayuki, Kariya-city Aichi 448-8661 (JP)
(74) Representative: Kuhnen & Wacker Patent- und Rechtsanwaltsbüro PartG mbB
(86) International application number: PCT/JP2016/002541
(87) International publication number: WO 2016/199364

(56) References cited:
- WO-A1-2014/043147
- JP-A- 2006 506 733
- JP-A- 2007 124 520
- JP-A- 2013 162 360
- US-A1- 2007 168 294
- US-A1- 2011 053 614

## Description

### CROSS REFERENCE TO RELATED APPLICATION

The present application is based on Japanese Patent Application No. 2015-116689 filed on June 9, 2015.

### TECHNICAL FIELD

The present disclosure relates to a software duplication prevention system provided with a function for preventing unauthorized use, a usage time limit, or the like.

### BACKGROUND ART

In the development of computer software, it is a generally known technique to provide a function (a function as a named procedure) through an application programming Interface (API). Typically, a necessary function is provided by being appropriately called from a main module having a function as an HMI (Human Machine Interface) or an application through the API.

For example, in a field requiring a special technique for positioning, such as an indoor positioning system, in order to allow anyone to easily create an application, such operation has been conducted where a company having an indoor positioning technique creates basic software and an API for indoor positioning and distributes those to an application creator for a fee or free.

In this case, it is common to set in the basic software a function for preventing duplication, a usage time limit, or the like. The settings for the function for preventing duplication, the usage time limit or the like have been made by, for example, employing a method of distributing a USB memory or the like incorporated with the function and information for a fee and permitting the use of the basic software only in a state where this USB memory or the like is connected to the terminal, or some other method.

### PRIOR ART LITERATURE

### PATENT LITERATURE

Patent Literature 1: JP 2011-154412 A
Patent Literature 2: JP 2010-226707 A

### SUMMARY OF INVENTION

The invention is set out in the appended set of claims.

Since the USB memory is required in the method to control the function for preventing duplication and the usage time limit as described above, the software might not be usable in equipment not provided with a USB memory interface, such as a smartphone. Further, the convenience might be hampered when the USB memory is needed at the time of using the software.

It is an object of the present disclosure to provide a software duplication prevention system provided with a function for preventing unauthorized use, a usage time limit or the like, without using a USB memory or the like.

According to one aspect of the present disclosure, a software duplication prevention system includes: a terminal that includes a receiver for data transmitted from a post and basic software; and the post that includes a transmitter transmitting the data to the terminal. The data transmitted from the post is transmitted as a second encrypted code encrypted with a second encryption key. The terminal includes a first decryption part that decrypts a first encrypted code encrypted with a first encryption key, a first decryption key corresponding to the first encryption key, and a second decryption part that decrypts the received second encrypted code. The terminal executes the basic software to decrypt the first encrypted code with the first decryption key and to acquire a second decryption key corresponding to the second encryption key, and decrypts the second encrypted code with the second decryption key.

According to the configuration, the second decryption key corresponding to the second encryption key is included inside the basic software provided in the terminal, and the second encrypted code created with the second encryption key is decrypted with the second decryption key to acquire an ID for reading post information. Hence it may be possible to prevent the unauthorized use of the post information.

### BRIEF DESCRIPTION OF DRAWINGS

The above and other aspects, features and advantages of the present disclosure will become more apparent from the following detailed description made with reference to the accompanying drawings." In the drawings:
FIG. 1 is a diagram illustrating a post placement in a first embodiment;
FIG. 2 is a block diagram showing a configuration of a software duplication prevention system according to the first embodiment;
FIG. 3 is a diagram showing an overview of a first encrypted code generator;
FIG. 4 is a diagram showing an overview of a basic software creator;
FIG. 5 is a block diagram showing a hardware configuration of a mobile terminal;
FIG. 6 is a block diagram showing a hardware configuration of a post;
FIG. 7 is a block diagram showing a hardware configuration of the first encrypted code generator;
FIG. 8 is a block diagram showing a hard configuration of the basic software creator;
FIG. 9 is a flowchart schematically showing a start process procedure for basic software in an application program;
FIG. 10 is a flowchart schematically showing a decryption procedure for a second encrypted code transmitted from the post;
FIG. 11 is a diagram illustrating an example of an ID reference;
FIG. 12 is a flowchart schematically showing the ID reference;
FIG. 13 is a block diagram showing a software duplication prevention system according to a second embodiment;
FIG. 14 is a diagram of a first encrypted code generator according to the second embodiment;
FIG. 15 is a diagram of a first encrypted code generator according to a third embodiment;
FIG. 16 is a diagram showing an overview of a basic software creator according to the third embodiment;
FIG. 17 is a block diagram showing a software duplication prevention system according to the third embodiment;
FIG. 18 is a flowchart schematically showing a start process procedure for basic software in an application program according to the third embodiment;
FIG. 19 is a block diagram showing a software duplication prevention system according to a fourth embodiment;
FIG. 20 is a flowchart schematically showing a decryption procedure for a second encrypted code transmitted from a post according to the fourth embodiment;
FIG. 21 is a diagram of a first encrypted code generator according to a fifth embodiment;
FIG. 22 is a block diagram showing a software duplication prevention system according to the fifth embodiment;
FIG. 23 is a flowchart schematically showing a start process procedure for basic software in an application program according to the fifth embodiment;
FIG. 24 is a diagram illustrating a post/latitude-and-longitude table according to a sixth embodiment;
FIG. 25 is a block diagram showing a software duplication prevention system according to the sixth embodiment;
FIG. 26 is a block diagram of a positioning system according to the sixth embodiment;
FIG. 27 is a diagram of a first encrypted code generator according to a seventh embodiment;
FIG. 28 is a block diagram showing a software duplication prevention system according to the seventh embodiment;
FIG. 29 is a block diagram of a positioning system according to the seventh embodiment;
FIG. 30 is a diagram of a first encrypted code generator according to an eighth embodiment;
FIG. 31 is a block diagram showing a software duplication prevention system according to the eighth embodiment;
FIG. 32 is a flowchart of a server access according to the eighth embodiment;
FIG. 33 is a diagram illustrating an authentication table according to the eighth embodiment; and
FIG. 34 is a flowchart of server authentication according to the eighth embodiment.

### DESCRIPTION OF EMBODIMENTS

### (First Embodiment)

Hereinafter, a software duplication prevention system 10 (hereinafter referred to as a present system 10) in a first embodiment will be described with reference to the drawings.

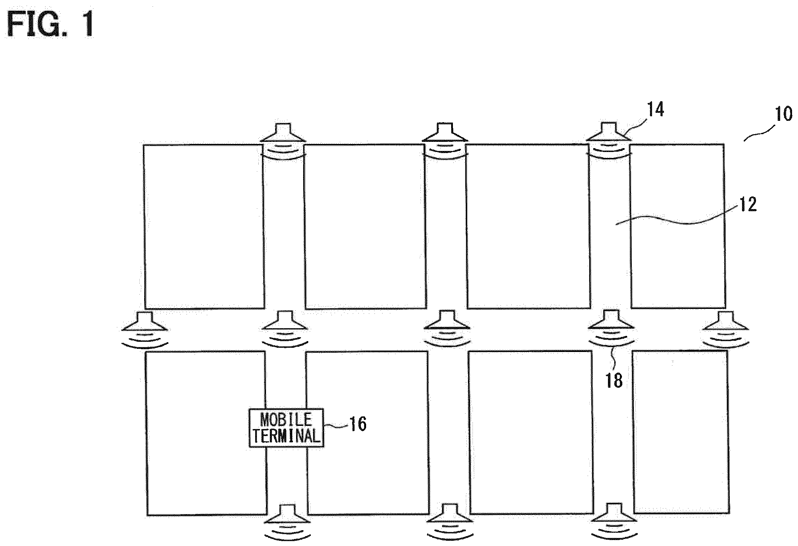

As shown in FIG. 1, multiple posts 14 are arranged in an indoor passage 12, and respectively transmit different IDs 18. In this context, when a mobile terminal 16 passes by one post 14, the mobile terminal 16 can acquire the ID 18 being information of the post 14. The ID 18 here means information that identifies each post 14, and, for example, the ID 18 may be a series of figures and symbols unique to each post 14, or position information.

In practice, the ID 18 transmitted from the post 14 is encrypted and transmitted, which is then decrypted inside the mobile terminal 16 and used, as described later. Although data from the post 14 is assumed to be the ID 18 here, it may be an image, HTML data, or the like, for example.

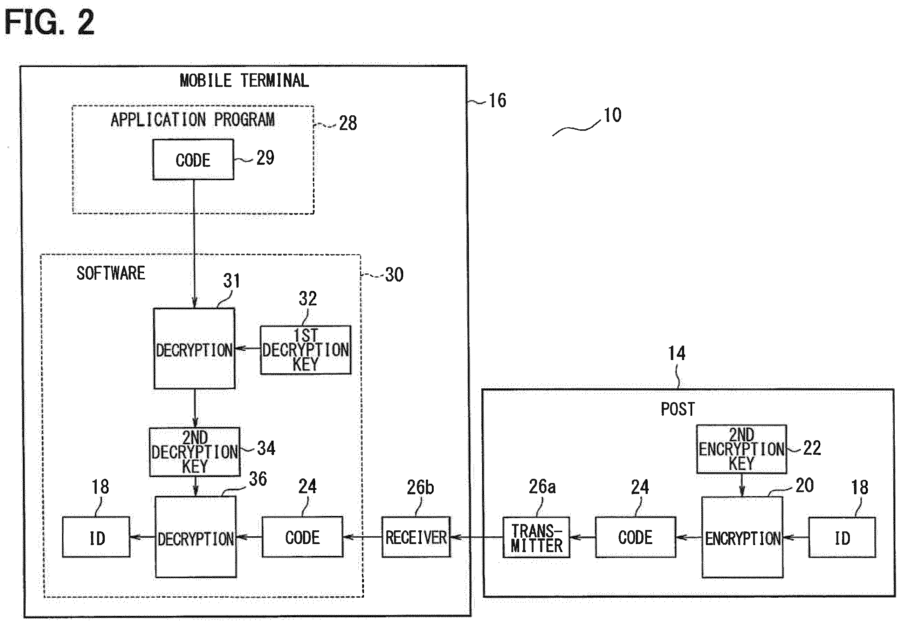

As shown in FIG. 2, each of the posts 14 has a different ID 18, a second encrypted code encryption part 20 (hereinafter referred to as an encryption part 20), a second encryption key 22, and a second encrypted code 24. Further, the post 14 has a transmitter 26a. The encryption part 20 is a program for encrypting the stored ID 18, and a key for the encryption is internally held as the second encryption key 22. The ID 18 is encrypted by the encryption part 20 to generate the second encrypted code 24. The second encrypted code 24 is transmitted to the outside from the transmitter. The process in the encryption part 20 is practically achieved through software by executing a program for encryption to the second encrypted code in a CPU 72, described later, of the post 14. The process in the encryption part 20 is achieved not restrictively through software, but may be achieved through hardware or by cooperation of hardware and software.

An algorithm for encryption is not mentioned here. Methods for storing the second encryption key 22 and the ID 18 are not restricted. For example, a memory that stores these may be a volatile type or a non-volatile type, or may be freely selected. Further, whether these pieces of data are stored in a changeable manner or in a fixed manner is not restricted, and a rewriting method or the like in the changeable case is not restricted.

The mobile terminal 16 is provided with an application program 28, basic software 30, and a receiver 26b. The basic software 30 is software having a duplication prevention function, and is provided by a creator of the basic software 30 to an application creator. The application program 28 and the basic software 30 may be in the form of being put together in one package. The mobile terminal 16 further includes an operation part, a display part, a power supply part, or the like, not shown. The application program 28 is software using the basic software 30.

The application program 28 holds a first encrypted code 29. As a method for holding the first encrypted code 29, there are considered a method of directly holding it in a program as a program code, a method of holding it by using a file, a method of describing it in a registry, a method of holding it in an external server, and some other method.

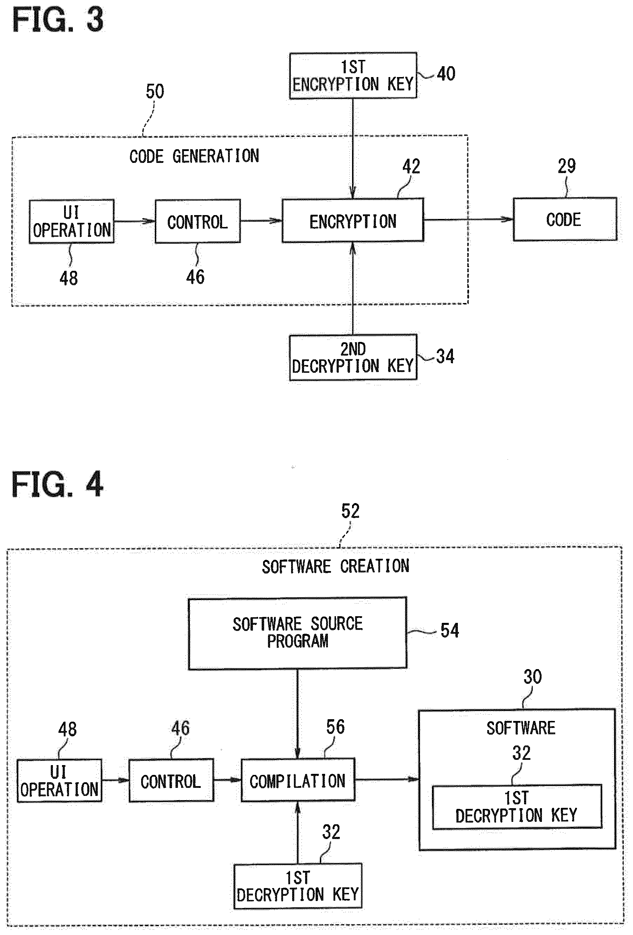

In the first encrypted code 29, a key for decoding the second encrypted code 24, which is the encrypted ID 18 from the post 14, is described in an encrypted form. Note that the first encrypted code 29 will be described in detail in FIG. 3.

The application program 28 notifies the first encrypted code 29 to the basic software 30. The basic software 30 is configured so as not to operate unless being notified of the first encrypted code 29. The basic software 30 includes inside a first decryption key 32 for decoding the first encrypted code 29.

The notified first encrypted code 29 is decrypted with the first decryption key 32 in a first encrypted code decryption part 31 (hereinafter referred to as a decryption part 31 or a first decryption part), to a second decryption key 34. The second decryption key 34 is a decryption key for the second encrypted code 24 outputted from the post 14. The process in the decryption part 31 is practically achieved through software by executing a program for encrypting the first encrypted code in the CPU 72, described later, of the mobile terminal 16. The process in the decryption part 31 is achieved not restrictively through software, but may be achieved through hardware or by cooperation of hardware and software.

The receiver 26b receives a signal including the second encrypted code 24 transmitted from the transmitter 26a of the post 14. The received second encrypted code 24 is decoded with the second decryption key 34 in a second encrypted code decryption part 36 (hereinafter referred to as a decryption part 36 or a second decryption part), to be decrypted to the ID 18 that is held in the post 14. Although not shown, by execution of the application program 28, the mobile terminal 16 uses the ID 18 to perform a service linked to a point, such as display. The process in the decryption part 36 is practically achieved through software by executing a program for encrypting the second encrypted code in the CPU 72, described later, of the mobile terminal 16. The process in the decryption part 36 is achieved not restrictively through software, but may be achieved through hardware or by cooperation of hardware and software.

As shown in FIG. 3, a UI operation part 48 is an operation part that operates a first encrypted code generator 50 (hereinafter referred to as a code generator 50) and includes, for example, a keyboard, a screen, a pointing device such as a mouse (not shown). A controller 46 executes a variety of programs in accordance with input from the UI operation part 48, to execute and control functions corresponding to these programs.

The second decryption key 34 is the second decryption key 34 corresponding to the second encryption key 22 stored in the post 14, described in FIG. 2. The second decryption key 34 is used for decoding the data encrypted with the second encryption key 22, and inputted into the present apparatus by the UI operation part 48. The first encryption key 40 is a key corresponding to the first decryption key 32, and the first decryption key 32 is stored in the basic software 30.

The UI operation part 48 inputs the first encryption key 40 and the second decryption key 34 into the code generator 50. In this context, by the input into the UI operation part 48, the controller 46 controls a first encrypted code encryption part 42 (hereinafter referred to as an encryption part 42), and then the first encrypted code 29 is thereby outputted. In other words, the second decryption key 34 is encrypted with the first encryption key 40 to generate the first encrypted code 29.

Note that the key (the encryption key, the decryption key) may be inputted by operation or by a file, may be acquired by communications, or may be embedded inside the program. The process in the encryption part 42 is practically achieved through software by executing a program for encrypting the first encrypted code in the controller 46 of the code generator 50. The process in the encryption part 42 is achieved not restrictively through software, but may be achieved through hardware or by cooperation of hardware and software.

As shown in FIG. 4, the UI operation part 48 is an operation part that operates a basic software creator 52 and includes, for example, a keyboard, a screen, a pointing device such as a mouse, and the like, which are not shown. A compilation part 56 executes and controls a variety of functions in accordance with instructions from the Ul operation part 48.

A basic software source program 54 (hereinafter referred to as a source program 54) is an original source program not having the first decryption key 32. The first decryption key 32 is incorporated into the source program 54 in the compilation part 56 to generate the basic software 30 that holds the first decryption key 32 inside. Although the source program 54 is described as a "source program" here, a compiled binary may naturally be used. In other words, it is intended here to embed the first decryption key 32 into the basic software 30 not having the first decryption key 32.

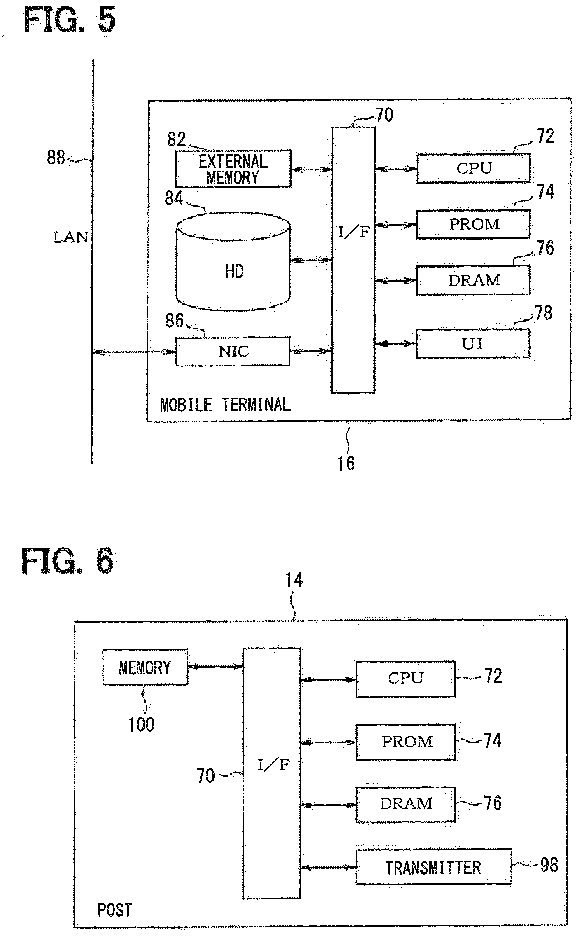

As shown in FIG. 5, the mobile terminal 16 employs a personal digital assistant such as a smartphone, or the like. The mobile terminal 16 has a configuration where a CPU 72, a PROM (programmable ROM) 74, a DRAM (dynamic random access memory) 76, a user interface 78, an external memory 82, a hard disk 84, and an NIC (network interface card) 86 are mutually connected via an interface (I/F) 70.

The PROM 74 is configured of a flash memory or the like, and typically stores a BIOS and the like. The DRAM 76 is used as a main storage device. A hard disk 84 is used as a storage memory and stores an OS, the basic software 30, the application program 28, and some other data. The user interface 78 includes a screen, a touch panel, and the like, not shown. The external memory 82 corresponds to an interface with external storage data such as a USB memory. The NIC 86 performs connection with a LAN 88. The LAN 88 includes a wireless LAN, public lines, and the like, for example.

As shown in FIG. 6, the post 14 has a configuration where the CPU 72, the PROM 74, the DRAM 76, a transmitter 98, and a memory 100 are mutually connected via the interface (I/F) 70. The PROM 74 stores a program for operating the post 14. The DRAM 76 is used as a temporary storage device that operates this program. The memory 100 is used for storing data specific to the post 14, such as a number of the post 14, and the transmitter 98 outputs this data. The post 14 includes an interface with the outside, not shown.

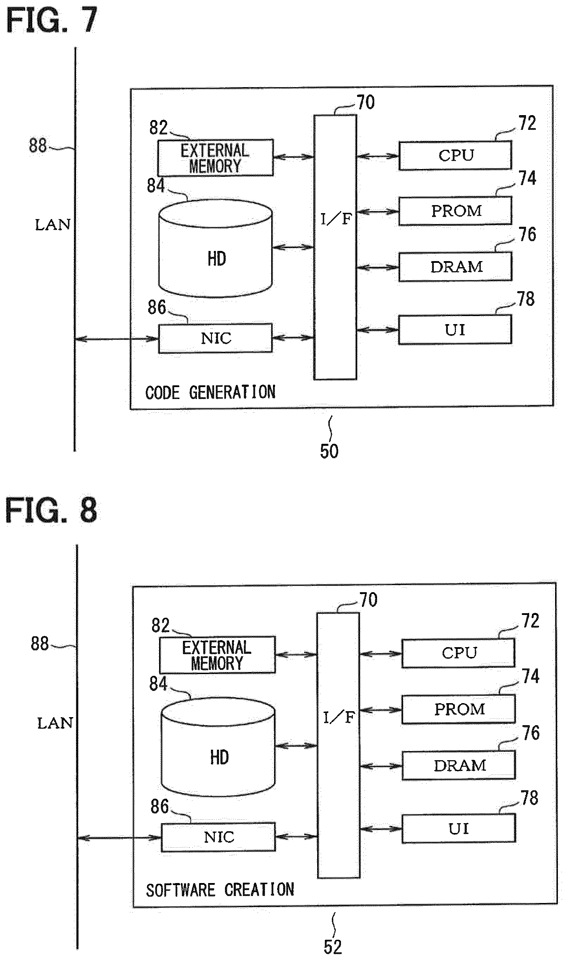

As shown in FIGS. 7 and 8, the code generator 50 and the basic software creator 52 each have a configuration where the CPU 72, the PROM 74, the DRAM 76, the user interface 78, the external memory 82, the hard disk 84, and the NIC (network interface card) 86 are mutually connected via the interface (I/F) 70.

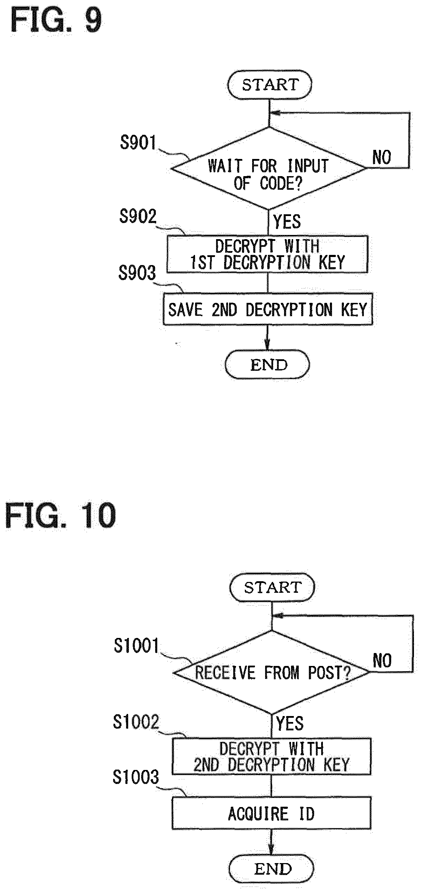

As shown in FIG. 9, first, the application program 28 waits for input of the first encrypted code 29 (S901). The basic software 30 is not started until the first encrypted code 29 is inputted (S901: NO). Next, when the first encrypted code 29 is inputted, the decryption part 31 decrypts the first encrypted code 29 with the first decryption key 32 held inside the basic software 30 (S902). The decryption part 31 then generates and saves the second decryption key 34 (S903), and the start process is completed. Note that it cannot be determined whether the decoded data is correct until the second encrypted code 24 is decrypted with the second decryption key 34. Concerning this, a third embodiment described later will show an embodiment where the above determination can immediately be made.

As shown in FIG. 10, first, the application program 28 waits for reception of the second encrypted code 24 transmitted from the post 14 (S1001), and when it is not received, the application program 28 continues to wait (S1001: NO). When the second encrypted code 24 is received, the second encrypted code 24 is decrypted with the second decryption key 34 (S1002) to acquire the ID 18 of the post 14 (S1003).

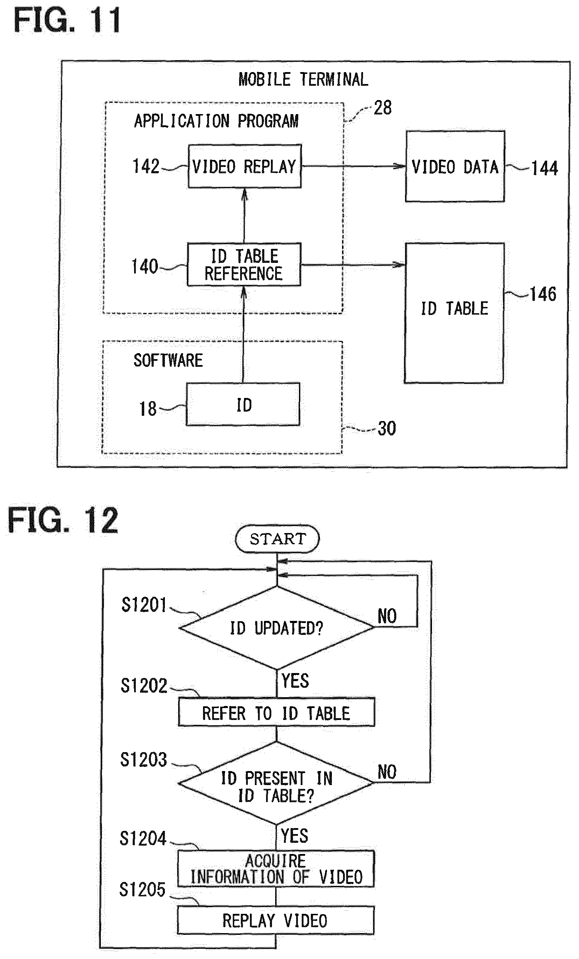

The foregoing ID 18 is used to achieve a desired function. Hereinafter, as one example, there is shown an example where a video linked to the ID 18 is replayed. As shown in FIG. 11, the application program 28 can refer to the ID 18 acquired by the basic software 30. The application program 28 causes an ID table reference part 140 to refer to an ID table 146.

The ID table 146 is stored inside the mobile terminal, or stored as a file in an external memory card, an external server, or the like. In the ID table 146, information showing a name such as a name of a video linked to the ID 18 or a storage location of the video. On the basis of this information, video data 144 is replayed in a video replay part 142. The replayed video data 144 is displayed on a screen not shown.

As shown in FIG. 12, the application program 28 confirms update of the ID 18 (S1201). When the ID 18 is not updated, the application program 28 waits until the ID 18 is updated (S1201: NO). When the ID 18 is updated (S1201: YES), the application program 28 refers to the ID table 146 (S1202). When the ID 18 is not present in the ID table 146 (S1203: NO), the application program 28 waits for the ID 18 to be updated again (S1201).

The reason for the ID 18 being not present in the ID table 146 is considered to be that, since the second decryption key 34 used in the basic software 30 is incorrect, the ID 18 encrypted in the decryption part 36 is incorrect. With the second decryption key 34 generated from the first encrypted code 29, the first encrypted code 29 used in the application program 28 can be determined to be unauthorized. In this case, the original function of replaying a video cannot be achieved, which as a result enables achievement of the function of preventing unauthorized duplication.

Note that the process is not immediately stopped here on consideration that the ID 18 might not be restored due to a communication defect since data is acquired from the post 14 by communications.

When the ID 18 is present in the ID table 146 (S1203: YES), information of the video is acquired (S1204), the video is replayed (S1205), and the process returns to confirmation of update of the ID 18 (S1201).

According to the present system 10 of the first embodiment, the decryption key is held inside the basic software 30 provided inside the terminal, and encryption data including the decryption key for the post 14, created with the encryption key that makes a pair with the decryption key, is provided from the application program 28. The basic software 30 does not operate unless being provided with the encryption data from the application program 28. When a false encryption data is provided, the decryption key for the external post 14 is not generated and the information of the post 14 thus cannot be read, and thereby it may be possible to prevent the unauthorized use. Further, the basic software 30 is configured so as not to be started unless being provided with the first encrypted code 29 from the application program 28, and thereby it may be possible to prevent unauthorized copying of the basic software 30 alone.

Moreover, the first encrypted code 29 is notified to the basic software 30 through an API and placed inside the application program 28, thereby disabling unauthorized copying of the first encrypted code 29.

When a randomly encrypted code is inputted, as shown in the description of FIG. 12, the correct ID 18 cannot be acquired, resulting in that the information of the post 14 cannot be used. Even if unauthorized copying of the first encrypted code 29 is possible, the second decryption key 34 does not match on the outside of a target area, resulting in that the ID 18 cannot be used. Accordingly, also in this case, the information of the post 14 cannot be used. Note that in this case, the control to stop the operation of the basic software 30 may be performed.

Although the second decryption key 34 for decoding the second encrypted code 24 from the post 14 is included in the first encrypted code 29, unauthorized reading or changing of the second decryption key 34 is not possible since the first encrypted code 29 is encrypted.

Further, since the key for decoding the second encrypted code 24, which is data to be transmitted from the post 14, is stored inside the first encrypted code 29, the second decryption key 34, which is the decryption key for the post 14 corresponding to an appropriate area, can be delivered just by changing only an encryption code 1 without changing the basic software 30 itself. It may be possible that these actions are achieved without using external equipment such as a USB memory.

### (Second Embodiment)

Next, a second embodiment will be described. The same element as in the first embodiment will be provided with the same numeral, and its description will be omitted, while only a part different from that in the first embodiment will be described. The second embodiment is an embodiment where in order to enhance secrecy of encrypted data, an unnecessary random number is added and then encryption is performed. After decoding, the random number is discarded.

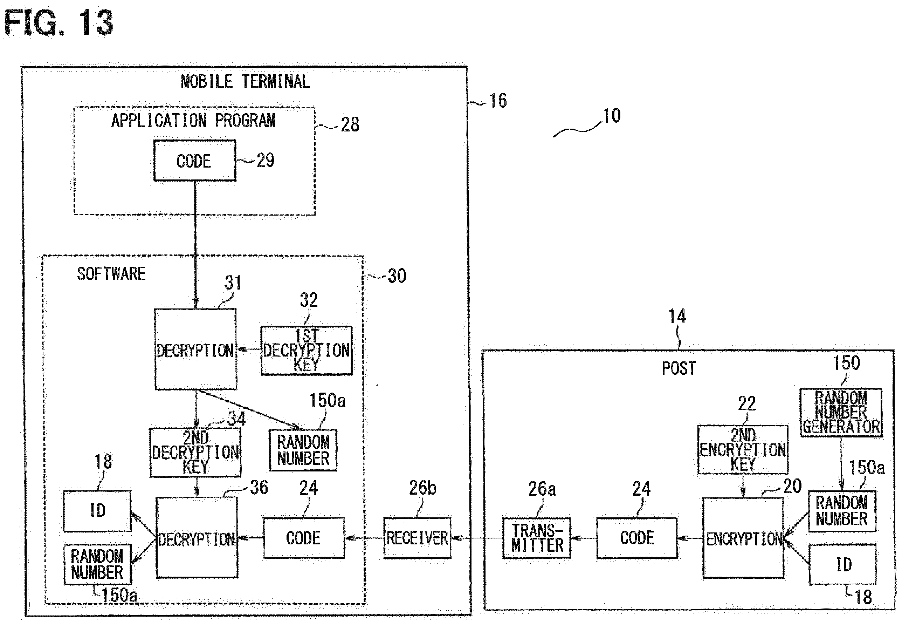

As shown in FIG. 13, the post 14 is provided with a random number generator 150. In the random number generator 150, a different random number 150a is generated regularly. The second encrypted code 24 is created using the generated random number 150a and the ID 18, and is then outputted from the transmitter 26a. The random number generator 150 may be configured through either software or hardware. In the basic software 30, the code is decoded in the decryption part 36 to acquire the ID 18 and the random number 150a.

The first encrypted code 29 also includes the random number 150a as described later. In the decryption part 31, the second decryption key 34 and the random number 150a are acquired. In the basic software 30, both the random number 150a created from the first encrypted code 29 and the random number 150a created from the second encrypted code 24 are just generated but not used.

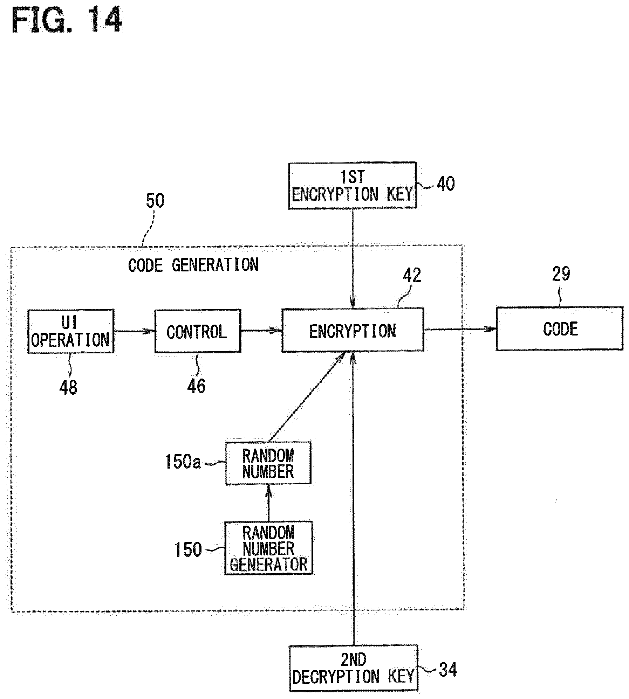

As shown in FIG. 14, the first encrypted code 29 added with the random number 150a is generated here. The code generator 50 is provided with the random number generator 150. In the random number generator 150, a different random number 150a is generated regularly. The generated random number 150a and the second decryption key 34 are encrypted with the first encryption key 40, to create the first encrypted code 29. Note that the random number 150a may be added to either the first encrypted code 29 or the second encrypted code 24.

According to the present system 10 of the second embodiment, the random number 150a that changes regularly is added in addition to the second decryption key 34 and the ID 18 that are fixed codes (fixed values), at the time of generating the first encrypted code 29 and the second encrypted code 24. As a result, values of the first encrypted code 29 and the second encrypted code 24 regularly change. This enables enhancement of the secrecy. In particular, when the ID 18 of the post 14 is not encrypted, the same encrypted code is always outputted, and hence the post 14 can be specified only by using the encrypted number. In the second embodiment, this can be prevented by setting a generation period for the random number 150a in each communication.

### (Third Embodiment)

Next, a third embodiment will be described. The same element as in the first embodiment will be provided with the same numeral, and its description will be omitted, while only a part different from that in the first embodiment will be described.

In the first embodiment described above, it has not been possible to detect recognition of unauthorized data of the first encrypted code 29 until the table for the ID 18 is referred to as shown in FIG. 12. The third embodiment is an embodiment with this respect improved. For achieving this, in the third embodiment, a confirming code 152 is embedded at the time of generating the first encrypted code 29.

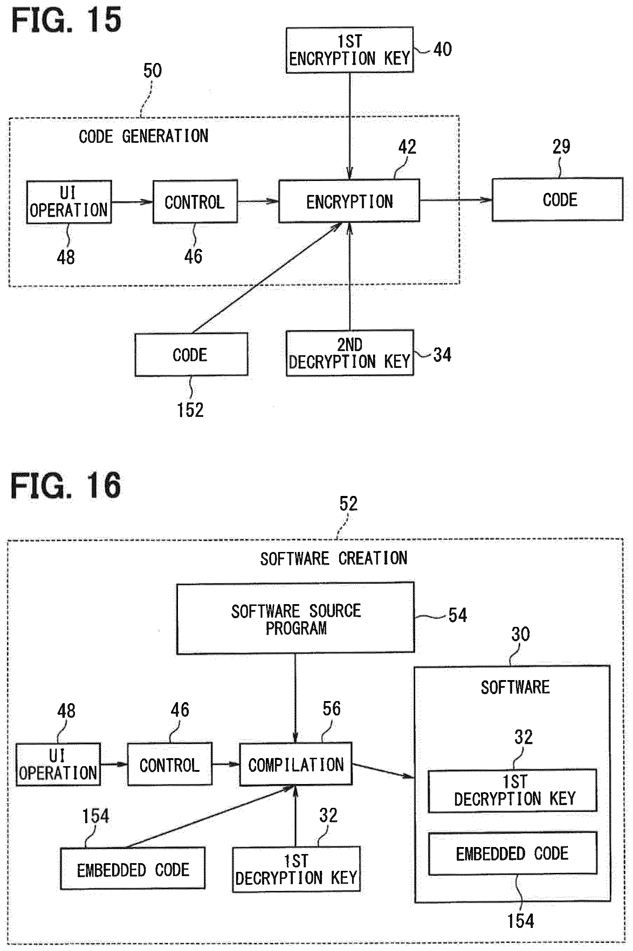

As shown in FIG. 15, the first encrypted code 29 added with the confirming code 152 is generated here. The confirming code 152 may be a fixed code or a code generated based on the second decryption key 34 by using an invertible calculation formula. The invertible calculation formula can be exemplified by an inversion code or the like. In this context, for the sake of description, a description will be given showing an example where the confirming code 152 is taken as a fixed code "ABCD." In the encryption part 42, the second decryption key 34 and the confirming code 152 are encrypted to generate the first encrypted code 29.

When the confirming code 152 is not a fixed value but a code generated based on the second decryption key 34, by using an invertible calculation formula, decided in advance or created on site, a confirming embedded code 154 (hereinafter referred to as an embedded code 154) described below is created in a confirming embedded code generator, not shown, and then used.

As shown in FIG. 16, in addition to the first decryption key 32, the embedded code 154 is embedded into the basic software 30. In this context, the embedded code 154 is "ABCD" which is the same value as the confirming code. When the confirming code 152 is not a fixed value but a code generated based on the second decryption key 34, the invertible calculation formula, used at the time of generating the embedded code 154 in the confirming embedded code generator, not shown, is embedded into the basic software 30.

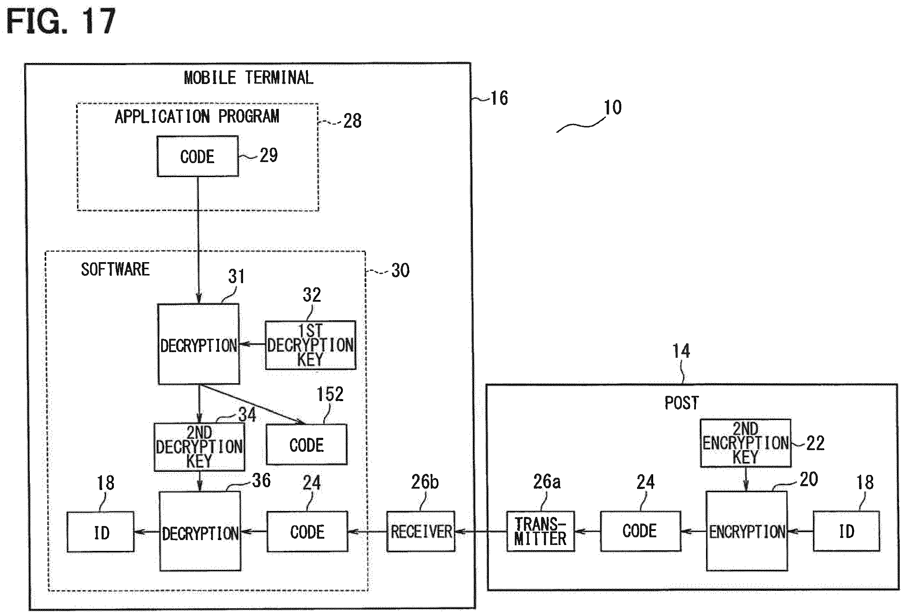

As shown in FIG. 17, the first encrypted code 29 is decrypted in the decryption part 31 to generate the second decryption key 34 and the confirming code 152. In this context, the confirming code "ABCD", set in FIG. 16, is decrypted.

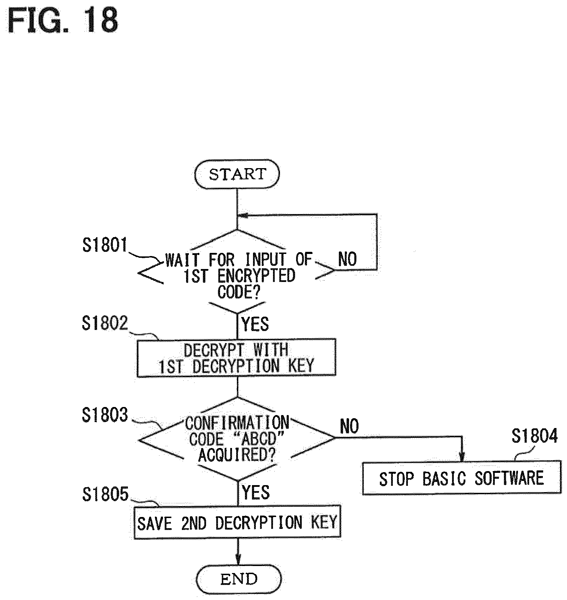

As shown in FIG. 18, first, the application program 28 waits for input of the first encrypted code 29 (S1801). The basic software 30 is not started until the first encrypted code 29 is inputted (S1801: NO). Next, when the first encrypted code 29 is inputted, the decryption part 31 decrypts the first encrypted code 29 with the first decryption key 32 held inside the basic software 30 (S1802). The first encrypted code 29 is acquired and then decrypted with the first decryption key 32, to generate the confirming code 152 and the second decryption key 34. Whether the decryption has been normally performed cannot be seen at this point.

Next, it is confirmed whether the content of the confirmation code is "ABCD" (S1803). When the content of the confirmation code is not "ABCD" (S1803: NO), the first encrypted code 29 is an unauthorized code, and hence the basic software 30 is stopped (S1804). When the content of the confirmation code is "ABCD" (S1803: YES), the second decryption key 34 is saved (S1805), and the process is completed.

Note that, as described above, the confirming code 152 may not be a fixed code, but may be a code generated based on the second decryption key 34. In this case, although not shown in the flowchart, the following may simply be conducted: the second decryption key 34 is read in a confirmation code determination part, a similar process is performed to the process of generating the confirming code 152, and the generated code is compared with the confirming code 152.

According to the present system 10 of the third embodiment, when the first encrypted code 29 is not normally decrypted, namely when the first encrypted code 29 and the basic program are not a correct pair, and namely it is the case of unauthorized use, it may be possible to instantly stop the basic program and prevent the unauthorized use.

### (Fourth Embodiment)

Next, a fourth embodiment will be described. The same element as in the first embodiment will be provided with the same numeral, and its description will be omitted, while only a part different from that in the first embodiment will be described.

The fourth embodiment is an embodiment where the encryption of the post 14 in the third embodiment is applied to prevent the use in an unauthorized area. For achieving this, at the time of generating the second encrypted code 24, a post confirming code 156 (hereinafter referred to as a confirming code 156) is embedded.

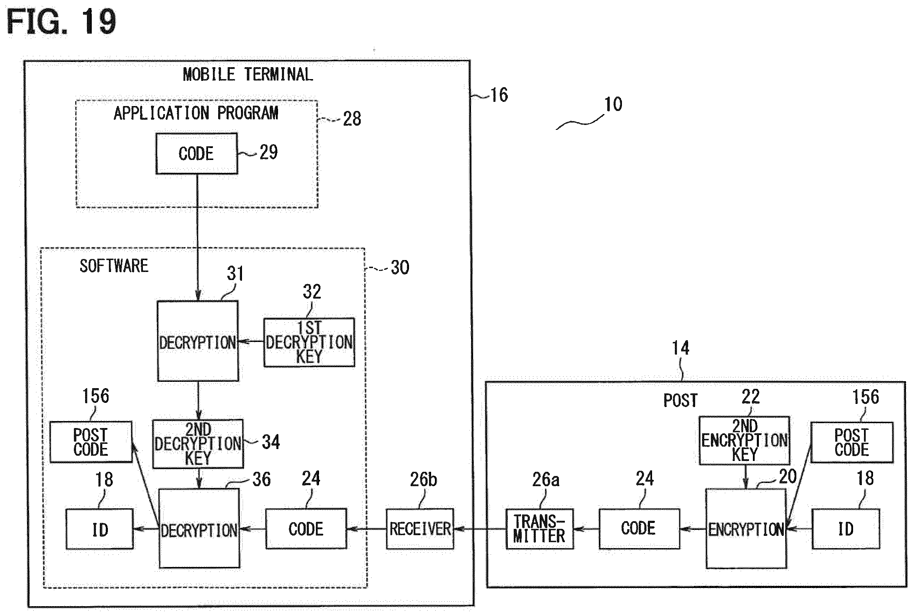

As shown in FIG. 19, the second encrypted code 24 added with the confirming code 156 is generated in the post 14. The confirming code 156 may have a similar configuration to that of the confirming code 152 described in the third embodiment. In this context, for the sake of description, a description will be given taking the confirming code 156 as a fixed code "ABCD."

In the encryption part 20, the ID 18 and the confirming code 156, namely the fixed code "ABCD", are encrypted to generate the second encrypted code 24. The second encrypted code 24 is transmitted by the transmitter 26a. In the basic software 30, the confirming code 156 and the ID 18 are generated from the second encrypted code 24.

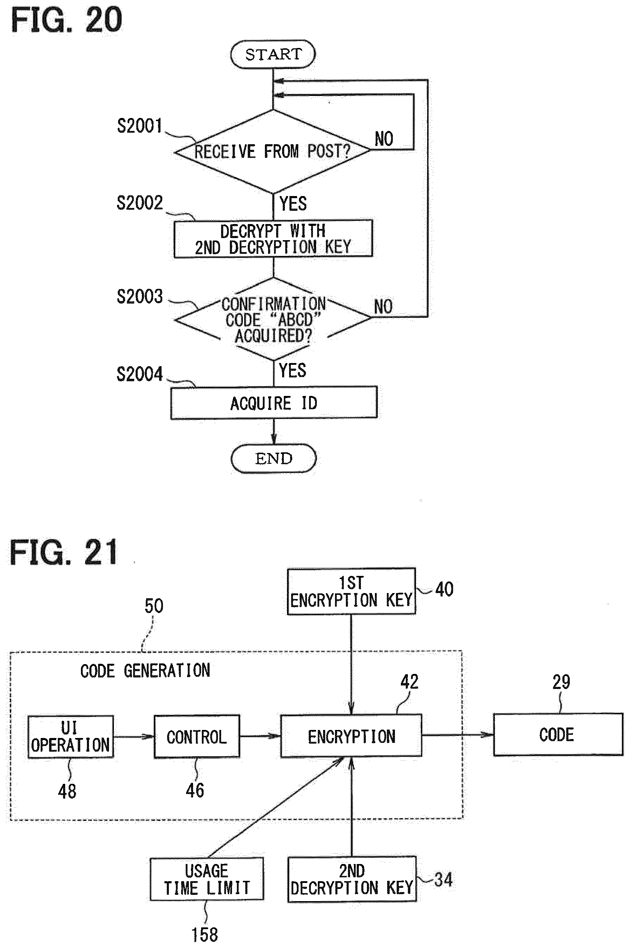

As shown in FIG. 20, in the mobile terminal 16, the application program 28 is first executed, and a signal from the post 14 is waited (S2001). Until the signal from the post 14 is received, the basic software 30 continues to wait (S2001: NO). When the signal from the post 14 is received (S2001: YES), the decryption part 36 decrypts a post confirmation code 190 and the ID 18 with the second decryption key 34 (S2002).

In this context, the mobile terminal 16 confirms whether the fixed code "ABCD", being a fixed value, has been acquired as the post confirmation code 190 (S2003). When the fixed code "ABCD" has not been acquired as the post confirmation code 190 (S2003: NO), the signal from the post 14 is waited again. This is conducted assuming a case where the data from the post 14 may be broken due to noise caused by communication failure or the like, for example. When the fixed code "ABCD" has been acquired as the post confirmation code 190 (S2003: YES), the ID 18 is acquired (S2004). Note that in place of the foregoing method, the method described in the third embodiment may be used to confirm the code.

According to the present system 10 of the fourth embodiment, the ID 18 is not received when used in an unauthorized area. It may be possible to prevent the unauthorized use. Further, the ID 18 is not received also when the data cannot be received normally due to communication failure or the like.

### (Fifth Embodiment)

Next, a fifth embodiment will be described. The same element as in the first embodiment will be provided with the same numeral, and its description will be omitted, while only a part different from that in the first embodiment will be described. In the fifth embodiment, a usage time limit is added to the first encrypted code 29 to prevent the unauthorized use outside the usage time limit.

As shown in FIG. 21, the first encrypted code 29 added with a usage time limit 158 is generated here. A variety of methods for setting the usage time limit 158 can be employed, such as a method of setting a last date of usage, the number of available times, the number of available days, or the like.

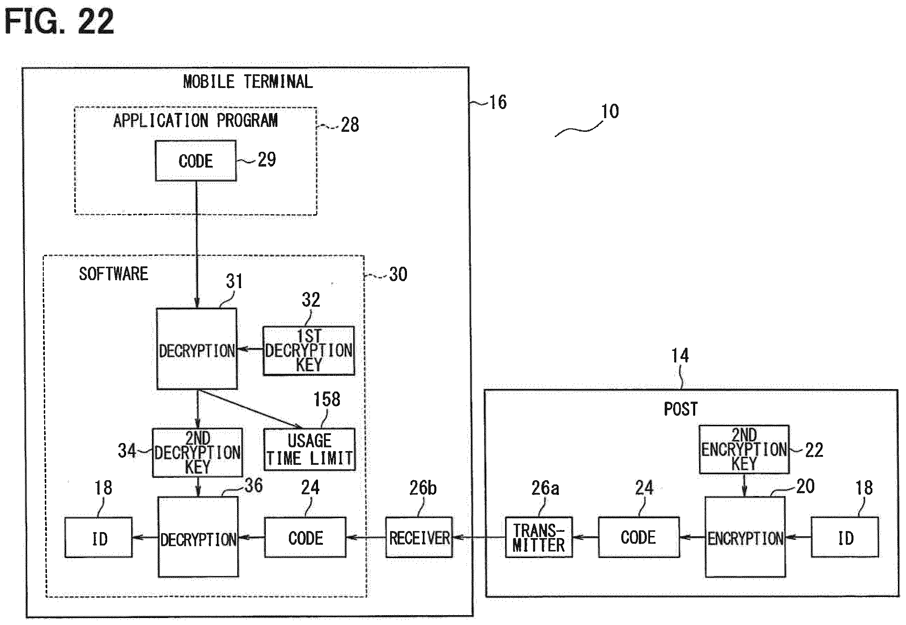

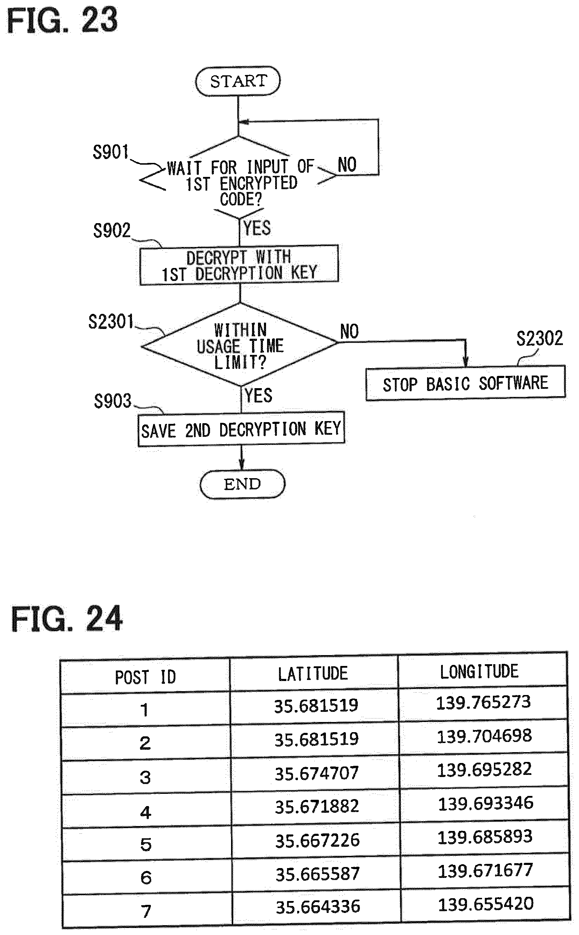

As shown in FIG. 22, since the second decryption key 34 and the usage time limit 158 are stored in the first encrypted code 29, the second decryption key 34 and the usage time limit 158 are acquired by decrypting the first encrypted code 29. As shown in FIG. 23, in this context, the usage time limit 158 is confirmed, and when the usage time limit 158 has been expired (S2301: NO), the basic software 30 is stopped (S2302). When the usage time limit has not been expired (S2301: YES), the second decryption key 34 is generated and then saved (S903), and the start process is completed.

For example, when a last date of usage is described as the usage time limit 158, there is considered a method of comparing the last date of usage with a calendar held in the mobile terminal 16. When the number of available dates (counted taking one day as one time), there is considered a method of counting each date of usage, or some other method.

According to the present system 10 of the fifth embodiment, the usage time limit 158 can be set in the first encrypted code 29, and thereby it may be possible to prevent the unauthorized use of the basic software 30. With the first encrypted code 29 having the usage time limit 158, the usage time limit 158 can change only by changing the first encrypted code 29 without changing the basic software 30 itself.

### (Sixth Embodiment)

Next, a sixth embodiment will be described. The same element as in the first embodiment will be provided with the same numeral, and its description will be omitted, while only a part different from that in the first embodiment will be described. In the sixth embodiment, the present system is applied to positioning.

As shown in FIG. 24, the ID 18 (the post IDs 1 to 7 in FIG. 24) stored in the post 14 and a latitude and a longitude which show the position of the post 14 are prepared as a table. With this table, after reception of the transmission data from the post 14 and decryption of the ID 18, the latitude and longitude of the received post 14 can be acquired by referring to the present table based on the decrypted ID 18. This enables positioning of the received post 14, namely specification of the position of the received post 14. The positioned latitude and longitude can be referred to in the application program 28.

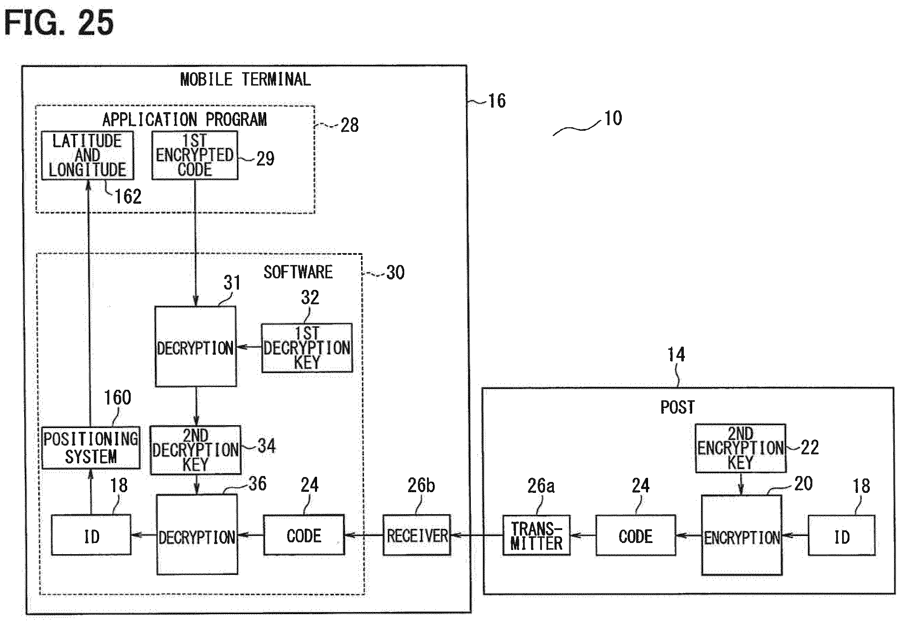

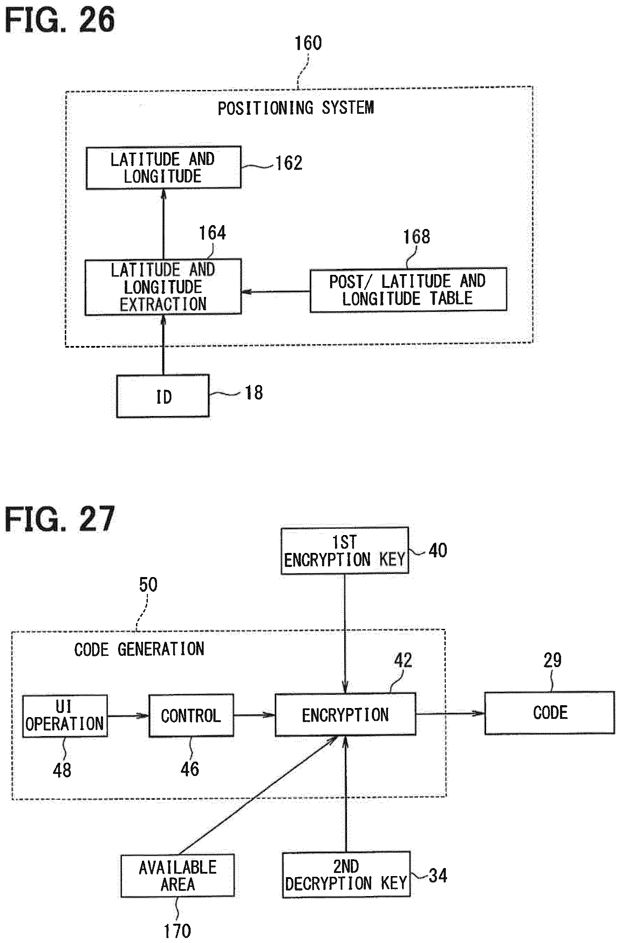

As shown in FIG. 25, the basic software 30 has a positioning system 160. When the positioning system 160 decrypts the ID 18 from the post 14, the positioning system 160 performs positioning based on the obtained ID 18. As shown in FIG. 26, a latitude and longitude 162 of the post 14 are calculated using the ID 18 from the post 14 and a post/latitude-and-longitude table 168 (hereinafter referred to as a table 168).

Although the table 168 is placed inside the present block in the present embodiment, the table 168 may be placed in another place. Further, the example has been shown in the present embodiment where the table 168 is provided with the correspondence relation between the post 14 and the latitude and longitude 162 which are the position information of the post 14. However, the table 168 may further be provided with height information, such as floor information or an altitude, and provided for use in a tower building, an underground shopping area, and the like.

Although the locating method has been exemplified by the latitude and longitude, as other methods, there may be added vector coordinates with respect to a reference point, or information capable of specifying a point, such as an intersection name, a road name, and an address. In this case, in the example of FIG. 25, the acquired information is not restricted to the latitude and longitude, but it is each of the variety of information linked to the post 14. This also applies to the information acquired by the application program 28 shown in FIG. 24.

According to the present system 10 of the sixth embodiment, by the use of the ID 18 of the post 14 and the table 168, it may be possible to achieve conversion of the post 14 to a latitude-and-longitude, namely positioning of the post 14. Further, the ID 18 can be used as it is as position information by converting the ID 18 to the latitude and longitude 162 or position information such as an address, and thereby it may be possible to achieve positioning.

### (Seventh Embodiment)

Next, a seventh embodiment will be described. The same element as in the first and sixth embodiments will be provided with the same numeral, and its description will be omitted, while only a part different from that in the first and sixth embodiments will be described. The seventh embodiment relates to a method for restricting an available area in the sixth embodiment.

As shown in FIG. 27, the first encrypted code 29 added with an available area 170 is generated here. The available area 170 may be rectangular or polygonal information showing ranges of the latitude and longitude, or may employ the address or the like. The available area 170 may also employ a name of a construction such as a building, or may be a name of an underground shopping area. Further, floor information or an altitude which shows a height direction may be added. In short, information showing an available range is added.

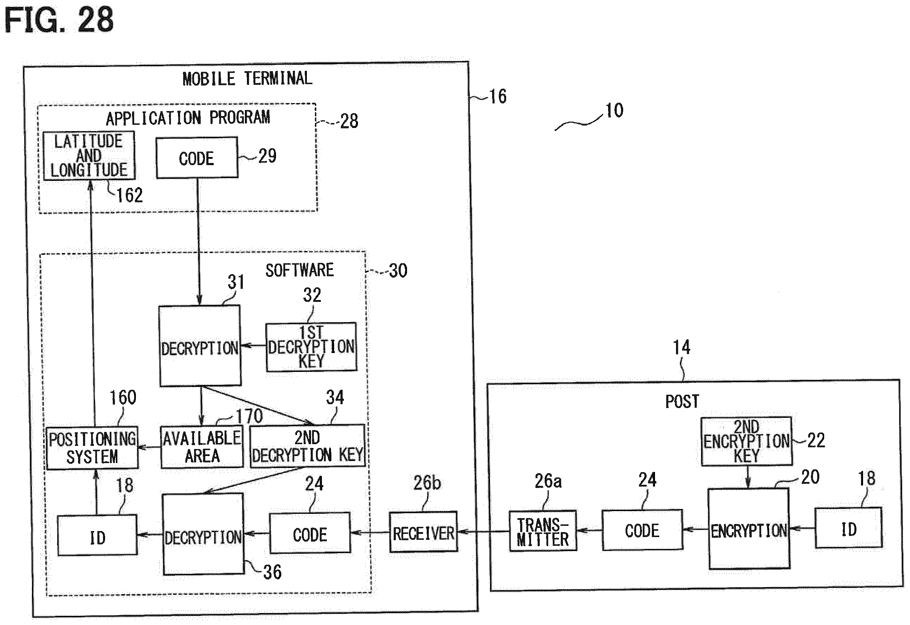

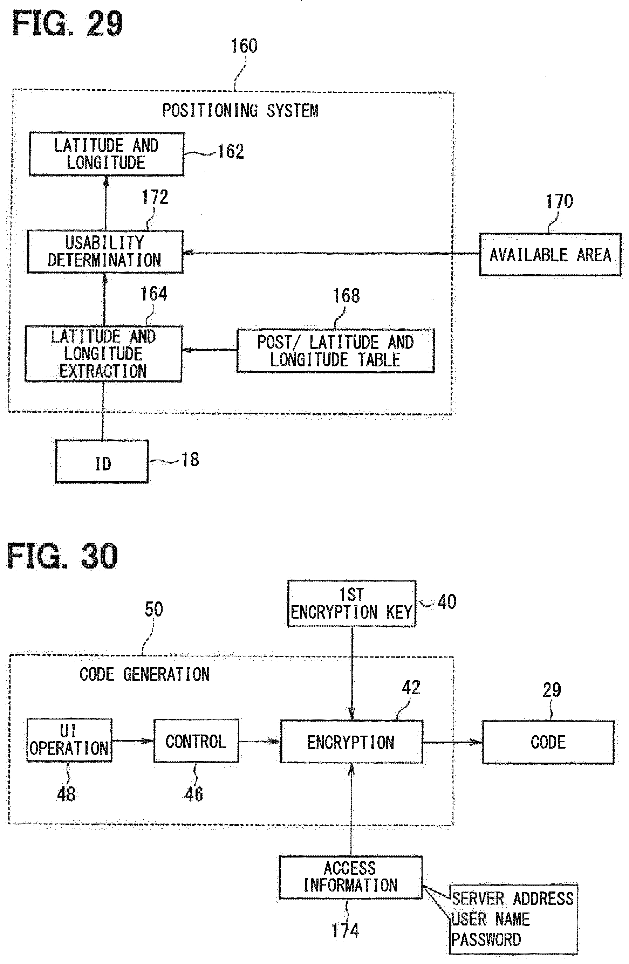

As shown in FIG. 28, the first encrypted code 29 is decoded with the first decryption key 32, to be decrypted to the second decryption key 34 and the available area 170. The available area 170 is transmitted to the positioning system 160. As shown in FIG. 29, an availability determination part 172 determines the availability or unavailability from the latitude and longitude 162 extracted by a latitude and longitude extraction part 164 and information described in the available area 170, and when determining the availability, the availability determination part 172 outputs the latitude and longitude 162.

According to the present system 10 of the seventh embodiment, the available area can be restricted in a system that applies the present system for positioning, and thereby it may be possible to prevent unauthorized duplication.

### (Eighth Embodiment)

Next, an eighth embodiment will be described. The same element as in the first embodiment will be provided with the same numeral, and its description will be omitted, while only a part different from that of the first embodiment will be described. In the eighth embodiment, server access information 174 (hereinafter referred to as access information 174) to an external server is described in the first encrypted code 29.

As shown in FIG. 30, the first encrypted code 29 added with the access information 174 is generated here. The access information 174 is access information to the server installed on the outside other than the mobile terminal 16, and means information for access to the server, such as a server address, a password, and the like. In this context, a description will be given showing an example where the access information 174 is a server address, a user name, and a password.

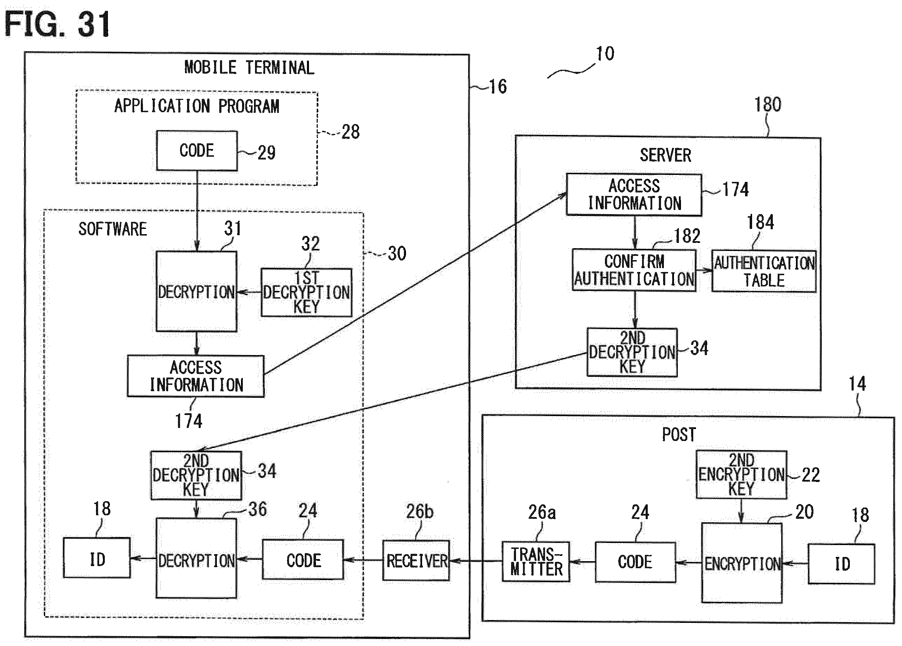

As shown in FIG. 31, the basic software 30 decrypts the first encrypted code 29 to acquire the access information 174. As shown in FIG. 29, the server address, the user name, and the password are acquired here. The mobile terminal 16 accesses a server 180 and transmits the acquired access information 174. In the server 180, an authentication confirmation part 182 checks an authentication table 184 based on the acquired access information 174 having been transmitted. After performing authentication, the server 180 transmits the second decryption key 34 to the mobile terminal 16.

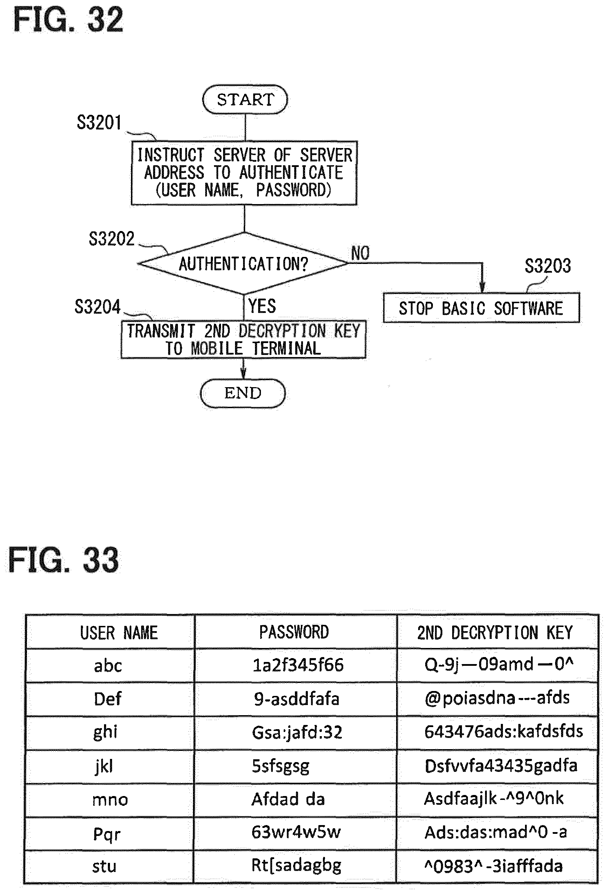

As shown in FIG. 32, when acquiring the access information 174, the mobile terminal 16 accesses the server 180 that has the acquired server address. The mobile terminal 16 transmits the acquired access information 174 (e.g., the user name, the password) to the server 180 and instructs the server 180 to authenticate the information (S3201). The server 180 performs authentication, and when the authentication succeeds (S3202: YES), the mobile terminal 16 acquires the second decryption key 34 from the server 180 (S3204). When the authentication fails (S3202: NO), this is taken as the case of the unauthorized use, and the basic software 30 is stopped (S3203).

As shown in FIG. 33, the authentication table 184 stores, for example, the user name, the password, and the second decryption key 34 in an associated state. The authentication is performed with reference to this table.

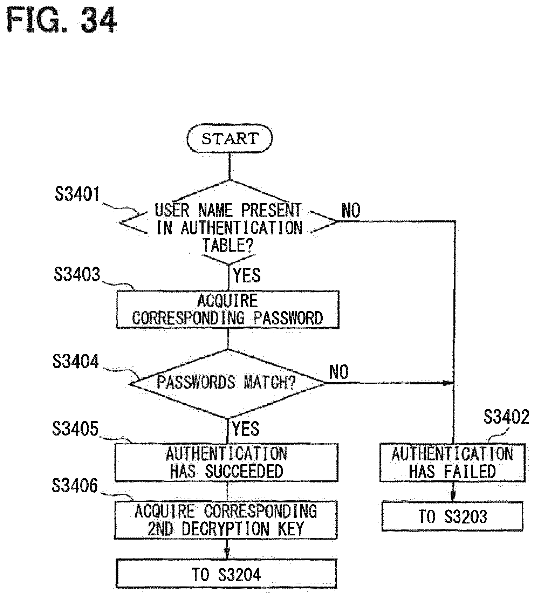

As shown in FIG. 34, the server 180 refers to the authentication table of FIG. 33 to determine whether the user name is in the authentication table 184 (S3401). When the user name is not in the authentication table 184 (S3401: NO), the server 180 determines that the authentication has failed (S3402), and the process proceeds to S3203 of FIG. 32.

When the user name is in the authentication table 184 (S3401: YES), a password corresponding to that user name in the authentication table 184 is acquired (S3403). Next, the server 180 determines whether the password acquired from the access information 174 and the password acquired from the authentication table 184 match, and when the passwords do not match (S3404: NO), the server 180 determines that the authentication has failed (S3402), and the process proceeds to S3203 of FIG. 32.

When the passwords match (S3404: YES), the server 180 determines that the authentication has succeeded (S3405), and acquires the corresponding second decryption key 34 in the authentication table 184 (S3406), and the process proceeds to S3204 of FIG. 32.

The description has been given showing the example where the associated pieces of information of the authentication table 184 in the server 180 are the user name and the password. However, this is not restrictive. For example, when a usage time limit or the like is put in the table, it can be used in a case where an expiration date is acquired at the time of authentication in the server 180, or some other case.

According to the present system 10 of the eighth embodiment, the access information 174 to the server 180 is stored into the first encrypted code 29, and the server 180 is caused to hold information of the second decryption key 34 and transmit the information to the mobile terminal 16. Hence, the operation of the basic software 30 can be stopped by changing the value of the second decryption key 34 without changing data of the first encrypted code 29 or by stopping creation of the second decryption key 34. Further, by having information such as usage-time-limit information, a change in expiration date can be achieved without changing the content of the first encrypted code 29.

Although the first encrypted code 29 has been defined to be only the access information 174 to the server 180 in the present embodiment, it may be combined with those in the first embodiment to the seventh embodiment to distribute the functions thereof. Further, although the description has been given in each of the first embodiment to eighth embodiment by using the method of using different keys as the encryption key and the decryption key, a common encryption key system may be used.

It is noted that a flowchart or the processing of the flowchart in the present application includes multiple steps (also referred to as sections), each of which is represented, for instance, as S901. Further, each step can be divided into several sub-steps while several steps can be combined into a single step.

While various embodiments, configurations, and aspects of software duplication prevention system have been exemplified, the embodiments, configurations, and aspects of the present disclosure are not limited to those described above. For example, embodiments, configurations, and aspects obtained from an appropriate combination of technical elements disclosed in different embodiments, configurations, and aspects are also included within the scope of the embodiments, configurations, and aspects of the present disclosure.

## Claims

1. A software duplication prevention system comprising:
a terminal (16) that includes a receiver (26b) for data transmitted from a post and basic software (30) and application program (28); and
a plurality of posts (14) that includes a transmitter (26a) transmitting the data to the terminal,
wherein:
the data transmitted from the post is transmitted as a second encrypted code (24) encrypted with a second encryption key (22);
the terminal includes
a first decryption part (31) decrypting a first encrypted code (29) that is included in the application program and is encrypted with a first encryption key (40),
a first decryption key (32) corresponding to the first encryption key and being included in the basic software, and
a second decryption part (36) decrypting the second encrypted code, which is received;
the basic software is configured not to operate unless being notified of the first encrypted code from the application program;
the second encrypted code corresponding to the data includes an ID which is information unique to each post, the ID being capable of identifying each post of the plurality of posts; and
the terminal executes the basic software to decrypt the first encrypted code with the first decryption key and to acquire a second decryption key (34) corresponding to the second encryption key, and decrypts the second encrypted code with the second decryption key.

2. The software duplication prevention system according to claim 1, further comprising:
a first encrypted code generator (50) that generates the first encrypted code with the first encryption key corresponding to the first decryption key.

3. The software duplication prevention system according to claim 1 or 2, further comprising:
a basic software creator (52) that incorporates the first decryption key (32) into the basic software.

4. The software duplication prevention system according to any one of claims 1 to 3, wherein:
the first encryption key is used in creation of the first encrypted code that is inputted into the basic software.

5. The software duplication prevention system according to any one of claims 1 to 4, wherein:
the basic software includes the first decryption key.

6. The software duplication prevention system according to any one of claims 1 to 5, wherein:
the second encryption key is used in creation of the second encrypted code transmitted from the post.

7. The software duplication prevention system according to any one of claims 1 to 6, wherein:
the first encrypted code includes random number information.

8. The software duplication prevention system according to any one of claims 1 to 7, wherein:
the first encrypted code includes a usage time limit.

9. The software duplication prevention system according to claim 8, wherein:
when the usage time limit is exceeded, operation for control by the basic software stops.

10. The software duplication prevention system according to any one of claims 1 to 9, wherein:
the ID includes position information.

## Patentansprüche

1. Software-Duplikationspräventionsprogramm, aufweisend:
ein Terminal (16), das einen Empfänger (26b) für Daten beinhaltet, die von einer Posten- und Basissoftware (30) und einem Anwendungsprogramm (28) übertragen werden; und
eine Mehrzahl von Posten (14), die einen Transmitter (26a) beinhalten, der die Daten an das Terminal überträgt,
wobei:
die von dem Posten übertragenen Daten als ein zweiter verschlüsselter Code (24) übertragen werden, der mit einem zweiten Verschlüsselungsschlüssel (22) verschlüsselt wird;
das Terminal beinhaltet:
ein erstes Entschlüsselungsteil (31), das einen ersten verschlüsselten Code (29) entschlüsselt, der in dem Anwendungsprogramm beinhaltet ist und mit einem ersten Verschlüsselungsschlüssel (40) verschlüsselt wird,
einen ersten Entschlüsselungsschlüssel (32), der dem ersten Verschlüsselungsschlüssel entspricht und in der Basissoftware beinhaltet ist, und
ein zweites Entschlüsselungsteil (36), das den zweiten verschlüsselten Schlüssel entschlüsselt, der empfangen wird;
die Basissoftware so konfiguriert ist, dass sie erst arbeitet, wenn sie von dem ersten verschlüsselten Code von dem Anwendungsprogramm benachrichtigt wird;
der zweite verschlüsselte Code, der den Daten entspricht, eine ID beinhaltet, die für einen jeden Posten in Bezug auf Informationen einzigartig ist, wobei die ID jeden Posten von der Mehrzahl von Posten identifizieren kann; und
das Terminal die Basissoftware zum Entschlüsseln des ersten verschlüsselten Codes mit dem ersten Entschlüsselungsschlüssel und zum Erhalten eines zweiten Verschlüsselungsschlüssels (34), der dem zweiten Verschlüsselungsschlüssel entspricht, ausführt und den zweiten verschlüsselten Code mit dem zweiten Entschlüsselungsschlüssel entschlüsselt.

2. Software-Duplikationspräventionsprogramm nach Anspruch 1, ferner aufweisend:
einen ersten verschlüsselten Code-Generator (50), der den ersten verschlüsselten Code erzeugt, wobei der erste Verschlüsselungsschlüssel dem ersten Entschlüsselungsschlüssel entspricht.

3. Software-Duplikationspräventionsprogramm nach Anspruch 1 oder 2, ferner aufweisend:
eine Basissoftware-Erzeugungseinrichtung (52), die den ersten Entschlüsselungsschlüssel (32) in die Basissoftware aufnimmt.

4. Software-Duplikationspräventionsprogramm nach einem der Ansprüche 1 bis 3, wobei:
der erste Verschlüsselungsschlüssel bei einer Erzeugung des ersten verschlüsselten Codes verwendet wird, der in die Basissoftware eingegeben wird.

5. Software-Duplikationspräventionsprogramm nach einem der Ansprüche 1 bis 4, wobei:
die Basissoftware den ersten Entschlüsselungsschlüssel beinhaltet.

6. Software-Duplikationspräventionsprogramm nach einem der Ansprüche 1 bis 5, wobei:
der zweite Verschlüsselungsschlüssel bei der Erzeugung des zweiten verschlüsselten Codes verwendet wird, der von dem Posten übertragen wird.

7. Software-Duplikationspräventionsprogramm nach einem der Ansprüche 1 bis 6, wobei:
der erste verschlüsselte Code zufällige Zahleninformationen beinhaltet.

8. Software-Duplikationspräventionsprogramm nach einem der Ansprüche 1 bis 7, wobei
der erste verschlüsselte Code eine Nutzungszeitbegrenzung beinhaltet.

9. Software-Duplikationspräventionsprogramm nach Anspruch 8, wobei:
wenn die Nutzungszeitbegrenzung überschritten ist, ein Betrieb zur Steuerung durch die Basissoftware unterbrochen wird.

10. Software-Duplikationspräventionsprogramm nach einem der Ansprüche 1 bis 9, wobei:
die ID Positionsinformationen beinhaltet.

## Revendications

1. Système de prévention de duplication de logiciel comprenant :
un terminal (16) qui inclut un récepteur (26b) pour des données transmises depuis un poste et un logiciel de base (30) et un programme d'application (28) ; et
une pluralité de postes (14) qui inclut un transmetteur (26a) transmettant les données au terminal,
dans lequel :
les données transmises depuis le poste sont transmises comme un second code chiffré (24) chiffré avec une seconde clé de chiffrement (22) ;
le terminal inclut
une première partie de déchiffrement (31) déchiffrant un premier code chiffré (29) qui est inclus dans le programme d'application et est chiffré avec une première clé de chiffrement (40),
une première clé de déchiffrement (32) correspondant à la première clé de chiffrement et qui est incluse dans le logiciel de base, et
une seconde partie de déchiffrement (36) déchiffrant le second code chiffré, qui est reçu ;
le logiciel de base est configuré pour ne pas fonctionner sauf si le premier code chiffré lui est notifié par le programme d'application ;
le second code chiffré correspondant aux données inclut un ID qui est une information unique à chaque poste, l'ID étant capable d'identifier chaque poste de la pluralité de postes ; et
le terminal exécute le logiciel de base pour déchiffrer le premier code chiffré avec la première clé de déchiffrement et pour acquérir une seconde clé de déchiffrement (34) correspondant à la seconde clé de chiffrement, et déchiffre le second code chiffré avec la seconde clé de déchiffrement.

2. Système de prévention de duplication de logiciel selon la revendication 1, comprenant en outre :
un premier générateur de code chiffré (50) qui génère le premier code chiffré avec la première clé de chiffrement correspondant à la première clé de déchiffrement.

3. Système de prévention de duplication de logiciel selon la revendication 1 ou 2, comprenant en outre :
un créateur de logiciel de base (52) qui incorpore la première clé de déchiffrement (32) dans le logiciel de base.

4. Système de prévention de duplication de logiciel selon l'une quelconque des revendications 1 à 3, dans lequel :
la première clé de chiffrement est utilisée dans la création du premier code chiffré qui est entré dans le logiciel de base.

5. Système de prévention de duplication de logiciel selon l'une quelconque des revendications 1 à 4, dans lequel :
le logiciel de base inclut la première clé de déchiffrement.

6. Système de prévention de duplication de logiciel selon l'une quelconque des revendications 1 à 5, dans lequel :
la seconde clé de chiffrement est utilisée dans la création du second code chiffré transmis depuis le poste.

7. Système de prévention de duplication de logiciel selon l'une quelconque des revendications 1 à 6, dans lequel :
le premier code chiffré inclut une information de nombre aléatoire.

8. Système de prévention de duplication de logiciel selon l'une quelconque des revendications 1 à 7, dans lequel :
le premier code chiffré inclut une limite de temps d'utilisation.

9. Système de prévention de duplication de logiciel selon la revendication 8, dans lequel :
lorsque la limite de temps d'utilisation est dépassée, l'opération pour un contrôle par le logiciel de base s'arrête.

10. Système de prévention de duplication de logiciel selon l'une quelconque des revendications 1 à 9, dans lequel :
l'ID inclut une information de position.
